# EUROPÄISCHE PATENTANMELDUNG

(11) **EP 0 933 283 A1**
(43) Veröffentlichungstag der Anmeldung: **04.08.1999**
(21) Anmeldenummer: 98123973.4
(22) Anmeldetag: 17.12.1998
(51) Int. Cl.: B62D 1/12

(54) **Stellelementanordnung zur Fahrzeugquerbewegungssteuerung**

(30) Priorität: 31.01.1998 DE 19803873
(71) Anmelder: DaimlerChrysler AG, 70567 Stuttgart (DE)
(72) Erfinder: Böhringer, Michael, 71334 Waiblingen (DE); Eckstein, Lutz, 70563 Stuttgart (DE)

(57) **Zusammenfassung**

Die Erfindung bezieht sich auf eine Stellelementanordnung (1,2a,2b,2c) zur Steuerung wenigstens der Querbewegung eines Fahrzeuges, insbesondere für ein allradgelenktes Fahrzeug, mit einem handbetätigbaren Stellelement.

Erfindungsgemäß ist das Stellelement zur Einstellung rotatorischer Fahrzeugsquerbewegungskomponenten um eine zur Fahrzeughochachse im wesentlichen parallele Drehachse rotatorisch und zur Einstellung translatorischer Fahrzeugquerbewegungskomponenten in Fahrzeugquerrichtung translatorisch betätigbar.

Verwendung z.B. für allradgelenkte Automobile.

## Beschreibung

Die Erfindung bezieht sich auf eine Stellelementanordnung zur Steuerung wenigstens der Querbewegung eines Fahrzeuges unter Verwendung eines handbetätigbaren Stellelementes.

Als handbetätigbares Stellelement zur FahrzeugquerbewegungsSteuerung wird herkömmlicherweise überwiegend ein rein rotatorisch betätigbares Lenkrad verwendet. Daneben wurde auch bereits die Verwendung handbetätigbarer Steuerknüppel, z.B. in Form sogenannter Joysticks, vorgeschlagen, die zur Steuerung der Fahrzeugquerbewegung in Fahrzeugquerrichtung translatorisch betätigbar sind. Unter dem Begriff "translatorisch" soll dabei vorliegend in einem weiteren Sinne neben einer rein translatorischen Bewegung auch eine Schwenkbewegung über einen begrenzten Schwenkwinkel von z.B. weniger als ± 90° bezüglich einer vertikalen Mittellage um eine zu einer Längsachse des Stellelementes senkrechte Schwenkachse verstanden werden. Zusätzlich können diese herkömmlichen handbetätigbaren Steuerknüppel bei Bedarf in Fahrzeuglängsrichtung translatorisch betätigbar sein, um die Fahrzeuglängsbewegung zu steuern. Der Begriff "betätigbar" soll dabei vorliegend sowohl Systemauslegungen, bei denen die Stellelementauslenkung das Maß für den gewünschten Steuerungseingriff darstellt, als auch Systemauslegungen umfassen, bei denen die Betätigungskraft dieses Maß für den gewünschten Steuerungseingriff darstellt.

Allradgelenkte Straßenfahrzeuge, bei denen die Räder beider Achsen durch Lenkungseingriffe verstellbar sind, besitzen eine größere Freiheit hinsichtlich der Querbewegungssteuerung als nur einachsig gelenkte Fahrzeuge, da bei ihnen sowohl eine translatorische Querbewegung als auch eine Rotationsbewegung um die Fahrzeughochachse möglich ist. Dieser Freiraum hinsichtlich der Fahrzeugquerbewegung wird durch Verwendung eines herkömmlichen Lenkrades als Querbewegungsstellelement nicht in vollem Umfang genutzt.

Der Erfindung liegt als technisches Problem die Bereitstellung einer Stellelementanordnung zur vorteilhaften Steuerung wenigstens der Querbewegung eines Fahrzeuges zugrunde, wobei die Anordnung inbesondere für allradgelenkte Fahrzeuge eine komfortable Querbewegungssteuerung ermöglicht.

Die Erfindung löst dieses Problem durch die Bereitstellung einer Stellelementanordnung mit den Merkmalen des Anspruches 1. Bei dieser Anordnung ist das handbetätigbare Stellelement sowohl zur Einstellung rotatorischer Fahrzeugquerbewegungskomponenten um eine zur Fahrzeughochachse im wesentlichen parallele Drehachse rotatorisch als auch zur Einstellung translatorischer Fahrzeugquerbewegungskomponenten in Fahrzeugquerrichtung translatorisch betätigbar. Über dieses Stellelement kann somit die gewünschte Fahrzeugquerbewegung durch einen Betätigungsvorgang angefordert werden, der richtungsmäßig mit der gewünschten Querbewegung korrespondiert. Für ein allradgelenktes Fahrzeug ergibt sich der zusätzliche Vorteil, daß dessen beiden Querbewegungsfreiheitsgrade gleichzeitig durch entsprechende Betätigung eines einzigen Stellelementes steuerbar sind.

Bei einer nach Anspruch 2 weitergebildeten Stellelementanordnung ist das Stellelement zusätzlich in Fahrzeuglängsrichtung translatorisch betätigbar, um die Fahrzeuglängsbewegung zu steuern. Dadurch kann mit einem einzigen Stellelement das Fahrzeug sowohl hinsichtlich seiner Längsbewegung wie auch hinsichtlich seiner Querbewegung gesteuert werden. Im Fall eines allradgelenkten Fahrzeuges hat der Fahrer sowohl den Längsbewegungs-Freiheitsgrad als auch die beiden Querbewegungs-Freiheitsgrade durch Betätigung dieses Stellelementes unter Kontrolle.

Bei einer nach Anspruch 3 weitergebildeten Stellelementanordnung ist das Stellelement als Steuerknüppel mit einem der Fahrzeugkontur nachgebildeten Griffteil ausgebildet. Die Realisierung als Steuerknüppel ist mit vergleichsweise geringem Aufwand möglich und überdies platzsparend. Das Griffteil in Form der nachgebildeten Fahrzeugkontur gibt dem Fahrer eine sowohl optisch als auch durch Fühlen direkt erfaßbare Information über die momentane Fahrzeuglage, insbesondere auch hinsichtlich der Drehwinkellage bezüglich der Fahrzeughochachse.

Bei einer nach Anspruch 4 weitergebildeten Stellelementanordnung weist das Stellelement ein von mindestens drei Stäben getragenes Griffteil auf, wobei sich die Stäbe in der Ruhelage im wesentlichen parallel zur Fahrzeughochachse erstrecken und drei von ihnen im Dreieck angeordnet sind. Dabei ist mindestens zwei Stäben eine jeweilige Sensorik zur Erfassung der Betätigungseinwirkungen, d.h. der durch eine Betätigung verursachten Auslenkung oder der ausgeübten Betätigungskraft, zugeordnet, um damit eindeutig auf den angeforderten Fahrzeugsteuerungseingriff schließen zu können. Ein Vorteil dieser Ausgestaltung besteht darin, daß der gewünschte Momentanpol der Bewegung direkt vorgegeben werden kann und nicht vom Fahrer aus einer reinen Rotation des Griffes und einer Querbewegung des Griffes synthetisiert werden muß. Dies verbessert die Kompatibilität von Bedienelement- und Fahrzeugbewegung.

Eine vorteilhafte Ausführungsform der Erfindung ist in den Zeichnungen dargestellt und wird nachfolgend beschrieben. Hierbei zeigen:
- Fig. 1: eine schematische Perspektivansicht eines Mitteltunnelbereichs eines Automobils mit einer Stellelementanordnung zur Quer- und Längsbewegungssteuerung,
- Fig. 2: ein schematisches Draufsichtdiagramm zur Erläuterung eines ersten beispielhaften Steuerungseingriffs bei der Stellelementanordnung von Fig. 1 und
- Fig. 3: ein schematisches Draufsichtdiagramm zur Erläuterung eines zweiten beispielhaften Steuerungseingriffs bei der Stellelementanordnung von Fig. 1.

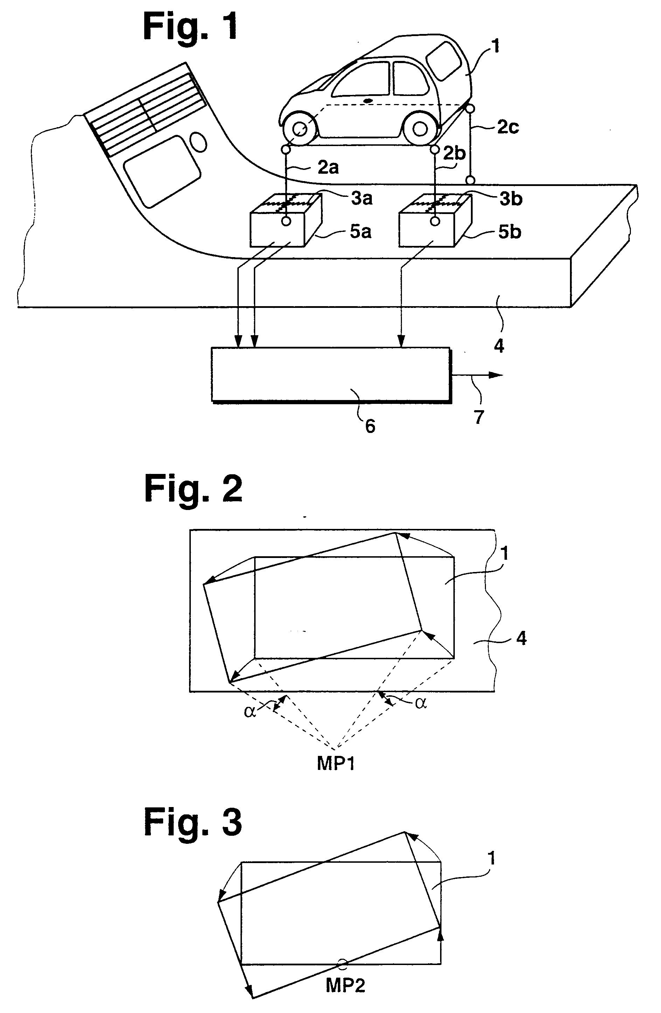

Fig. 1 zeigt schematisch eine Stellelementanordnung zur Steuerung der Querbewegung und der Längsbewegung eines allradgelenkten Automobils mit einem als Steuerknüppel, d.h. Joystick, ausgebildeten Stellelement. Das Stellelement beinhaltet ein Griffteil 1, das der Fahrzeugkontur nachgebildet und von drei Stäben 2a, 2b, 2c getragen ist. Die Stäbe 2a, 2b, 2c erstrecken sich in der in Fig. 1 gezeigten Ruhe- bzw. Mittellage des Stellelements parallel zur Fahrzeughochachse, wobei sie an ihrem unteren Ende auf einem Mitteltunnel 4 des Fahrzeugs gelagert sind. Dabei sind sowohl die Verbindungen des Griffteils 1 mit den Stäben 2a, 2b, 2c als auch diejenigen der Stäbe 2a, 2b, 2c mit dem Mitteltunnel 4 durch kardanische Lagerungen realisiert.

Während der eine Stab 2c ohne zugeordnete Sensorik einfach am Mitteltunnel 4 angelenkt ist, sind die beiden anderen Stäbe 2a, 2b als Einzel-Joysticks ausgebildet, indem ihnen im Bereich ihrer Anlenkung am Mitteltunnel 4 jeweils eine kombinierte Zentrier- und Sensoreinheit 5a, 5b zugeordnet ist. Jede dieser beiden Einheiten 3a, 3b beinhaltet eine Zentrieranordnung 3a, 3b in Form mehrer Rückstellfedern, welche den betreffenden Stab 2a, 2b elastisch in der vertikalen Null-Lage halten, sowie ein nicht näher gezeigtes Sensorelement, das die Momentanlage des betreffenden Stabes 2a, 2b relativ zum Mitteltunnel 4 erfaßt. In die Federzentrieranordnung 3a 3b, sind je nach Bedarf Dämpfungs- und/oder Reibungselemente integriert.

Das Stellelement besitzt drei fahrzeugsteuerungsrelevante Betätigungs-Freiheitsgrade, nämlich einen translatorischen Freiheitsgrad in Fahrzeuglängsrichtung zur Fahrzeuglängsbewegungssteuerung sowie zum einen einen translatorischen Querbewegungs-Freiheitsgrad und zum anderen einen rotatorischen Querbewegungs-Freiheitsgrad um die Fahrzeughochachse zur Fahrzeugquerbewegungssteuerung des allradgelenkten Fahrzeuges. Die von den beiden Sensorelementen gebildete Sensorik ist dementsprechend so ausgelegt, daß sie drei lagecharakterisierende Größen für die beiden lagesensierten Stäbe 2a, 2b erfaßt, z.B. drei Winkel dieser Stäbe 2a, 2b bezüglich raumfester Koordinatenachsen, um die Lage des Griffteils 1 und damit des Stellelementes insgesamt eindeutig zu erkennen. Da die Längsbewegung des Fahrzeugs somit ebenfalls über das handbetätigbare Stellelement erfolgt, entfällt die herkömmlicherweise hierzu vorgesehene Gas- und Bremspedalerie ebenso wie ein herkömmliches Lenkrad.

Ein Längs- und/oder Querbewegungssteuereingriff wird folglich durch entsprechende Betätigung des Griffteils 1 translatorisch in Längsrichtung und/oder translatorisch in Querrichtung und/oder rotatorisch um eine zur Fahrzeughochachse parallele Drehachse vorgenommen, wodurch sich das Griffteil 1 und mit ihm die Stäbe 2a, 2b, 2c entsprechend auslenken. Die Auslenkung der beiden lagesensierten Stäbe 2a, 2b wird dann von den zugeordneten Zentrier- und Sensoreinheiten 5a, 5b erfaßt, die eine entsprechende Lageinformation an eine Steuereinheit 6 abgeben. Die Steuereinheit 6 schließt daraus auf den gewünschten Steuerungseingriff und gibt ein entsprechendes Steuerungssignal 7 ab, mit dem dann ein Antrieb bzw. eine Bremsanlage des Fahrzeuges sowie eine Lenkstelleinrichtung zur Lenkwinkeleinstellung der Räder beider Achsen geeignet angesteuert werden, um die angeforderte Längs- und Querbewegung des Fahrzeuges auszuführen.

Alternativ zur gezeigten, passiven Auslegung der beiden von den lagesensierten Stäben 2a, 2b gebildeten Einzel-Joysticks mit Federzentrierung kann eine aktive Auslegung derselben vorgesehen sein, beispielsweise in der Form, daß nicht, wie beschrieben, die Auslenkung des Griffteils 1 und damit der Stäbe 2a, 2b, 2c, sondern die vom Fahrer darauf ausgeübte Betätigungskraft erfaßt und als Maß für den gewünschten Längs- bzw. Querbewegungssteuereingriff herangezogen wird und die daraus folgende, tatsächliche Fahrzeugbewegung als entsprechende Auslenkung des Griffteils 1 dem Fahrer zurückgemeldet wird, wozu dann dem Stellelement eine entsprechende Aktuatorik zugeordnet wird. In einer weiteren Variante kann der gezeigten Realisierung eines auslenkbaren Stellelementes eine aktive Rückmeldung für den Fahrer in der Form zugeordnet werden, daß die dem Stellelement durch den Fahrer aufgeprägten Winkelauslenkungen als Sollwertvorgaben für die Längs- und Querbewegungssteuerung behandelt werden, wie beschrieben, und über eine entsprechende Aktuatorik Reaktionskräfte auf das Stellelement ausgeübt werden, die dem Fahrer Informationen über die tatsächliche Fahrzeugbewegung geben. Derartige aktive Stellelementauslegungen erlauben eine Rückmeldung von beliebigen Größen allein oder in Kombination, z.B. hinsichtlich Querbeschleunigung und Giergeschwindigkeit, wobei das jeweilige Stellelement eine geeignete elektrische Schnittstelle und Aktuatorik besitzt.

Die Fig. 2 und 3 veranschaulichen zwei beispielhafte Querbewegungssteuerungseingriffe, die der Fahrer über die in Fig. 1 gezeigte Stellelementanordnung anfordern kann. Fig. 2 veranschaulicht eine Drehbewegungskomponente, bei welcher der Fahrer das Griffteil 1 um einen gewissen Winkel α bezüglich einer zur Fahrzeughochachse parallelen Achse dreht, die durch einen Momentanpol MP1 bestimmt ist, der seitlich außerhalb des Bereich des Mitteltunnels 4 liegt. Die zu den vier Fahrzeugeckbereichen gezeichneten Verbindungspfeile geben die Richtung an, in welcher die Räder das allradgelenkten Fahrzeuges auf diesen Steuerungsbefehl hin eingeschlagen werden, um dadurch die angeforderte Fahrzeugbewegung zu bewerkstelligen. Wenn das Griffteil 1 zusätzlich nach vorn oder hinten bewegt wird, ist die Querbewegungsänderung von einer entsprechenden Beschleunigung bzw. Verzögerung des Fahrzeuges begleitet.

Bei dem in Fig. 3 veranschaulichten Beispiel dreht der Fahrer das Griffteil 1 und damit das Stellelement insgesamt um eine zur Fahrzeughochachse parallele Achse, die durch einen Momentanpol MP2 bestimmt ist, der in diesem Fall auf Höhe einer Seitenmitte der Griffteil-Fahrzeugkontur 1 liegt. Dadurch wird eine entsprechende, im wesentlichen rein rotatorische Querbewegung des Fahrzeuges angefordert. Die Räder des allradgelenkten Fahrzeuges werden hierzu wiederum so eingeschlagen, wie durch die Verbindungspfeile an den Fahrzeugeckbereichen in Fig. 3 symbolisiert.

Es versteht sich, daß neben den oben erwähnten weitere Realisierungen der erfindungsgemäßen Stellelementanordnung möglich sind, beispielsweise solche, bei denen mehr als drei das Griffteil tragende Stäbe vorgesehen sind, oder solche, bei denen die Stäbe nicht wie gezeigt in den Eckbereichen, sondern an anderer Stelle der Griffteil-Fahrzeugkontur 1 oder deren Träger angeordnet sind. Des weiteren sind selbstverständlich Realisierungen möglich, bei denen das Stellelement als herkömmlich gestalteter, handbetätigbarer Steuerknüppel gestaltet ist, beispielsweise mit einem kugelförmigen Griffkopf, der von einem starren, z.B. am Fahrzeugmitteltunnel drehbeweglich und in Fahrzeugquerrichtung schwenkbeweglich sowie optional darüber hinaus in Fahrzeuglängsrichtung schwenkbeweglich an der Fahrzeugkarosserie gelagerten Schaft gehalten ist. Es versteht sich, daß die erfindungsgemäße Stellelementanordnung nicht nur wie beschrieben für allradgelenkte Fahrzeuge, sondern auch für nur einachsig gelenkte Fahrzeuge verwendbar ist.

## Patentansprüche

1. Stellelementanordnung zur Steuerung wenigstens der Querbewegung eines Fahrzeuges, insbesondere für ein allradgelenktes Fahrzeug, mit
- einem handbetätigbaren Stellelement (1, 2a, 2b, 2c),
**dadurch gekennzeichnet, daß**
- das Stellelement (1, 2a, 2b, 2c) zur Einstellung rotatorischer Fahrzeugquerbewegungskomponenten um eine zur Fahrzeughochachse im wesentlichen parallele Drehachse rotatorisch und zur Einstellung translatorischer Fahrzeugquerbewegungskomponenten in Fahrzeugquerrichtung translatorisch betätigbar ist.

2. Stellelementanordnung nach Anspruch 1, weiter
**dadurch gekennzeichnet, daß**
das Stellelement (1, 2a, 2b, 2c) zusätzlich zur Steuerung der Fahrzeuglängsbewegung dient und hierfür in Fahrzeuglängsrichtung translatorisch betätigbar ist.

3. Stellelementanordnung nach Anspruch 1 oder 2, weiter
**dadurch gekennzeichnet, daß**
das Stellelement als Steuerknüppel mit einem der Fahrzeugkontur nachgebildeten Griffteil (1) ausgebildet ist.

4. Stellelementanordnung nach einem der Ansprüche 1 bis 3, weiter
**dadurch gekennzeichnet, daß**
das Stellelement ein von mindestens drei Stäben (2a, 2b, 2c) getragenes Griffteil (1) aufweist, die sich in der Ruhelage im wesentlichen parallel zur Fahrzeughochachse erstrecken, wobei mindestens zwei Stäben (2a, 2b) eine jeweilige Sensorik (5a, 5b) zur Erfassung der Betätigungseinwirkungen zugeordnet ist.
